# FASCICULE DE BREVET EUROPEEN

(11) **EP 1 718 423 B1**
(45) Date de publication et mention de la délivrance du brevet: **22.05.2013**
(21) Numéro de dépôt: 04816611.0
(22) Date de dépôt: 30.12.2004
(51) Int. Cl.: B07C 3/14, B07C 3/00

(54) **PROCEDE POUR TRIER DES ENVOIS POSTAUX EN PLUSIEURS PASSES DE TRI**
VERFAHREN ZUM SORTIEREN VON POSTGUT MITTELS MEHRERER SORTIERDURCHLÄUFE
METHOD FOR SORTING MAIL BY MEANS OF A PLURALITY OF SORTING PASSES

(30) Priorité: 18.02.2004 FR 0450292
(43) Date de publication de la demande: 08.11.2006
(73) Titulaire: Solystic, 94257 Gentilly (FR)
(72) Inventeur: CAILLON, Christophe, F-91220 BRETIGNY (FR)
(74) Mandataire: Prugneau, Philippe
(86) Numéro de dépôt international: PCT/FR2004/050764
(87) Numéro de publication internationale: WO 2005/089966

(56) Documents cités:
- EP-B- 1 222 037
- DE-A- 4 000 603
- FR-A- 2 841 673

## Description

L'invention concerne un procédé pour trier des envois postaux en plusieurs passes de tri à l'aide d'au moins une machine de tri ayant des sorties de tri composées de bac, chaque envoi postal ayant une surface portant une adresse de distribution apte à être reconnue dans la machine de tri par un système de traitement de données pour la reconnaissance automatique d'adresse par OCR et/ou par vidéo-codage.

Le procédé selon l'invention est plus particulièrement adapté au tri des envois de grand format (dits objets plats) sur lesquels il est coûteux d'apposer une marque d'identification mais le procédé selon l'invention peut s'étendre à d'autres types d'envois postaux comme les lettres et les paquets par exemple.

On connaît du document de brevet européen EP-1222037, un procédé pour trier des envois postaux en plusieurs passes de tri tel que défini par le préambule de la revendication 1 dans lequel on forme au fur et à mesure du passage des envois postaux dans la machine de tri, une image de la surface de chaque envoi postal qui comporte l'information d'adresse de distribution et on dérive de cette image une empreinte ou signature numérique qui sert à identifier l'envoi postal dans le système de reconnaissance automatique de l'adresse de distribution par OCR ou vidéo-codage. L'utilisation d'une telle empreinte numérique permet de s'affranchir de l'emploi d'un marquage sur les envois postaux du type code à barres, encore connu sous le nom de « chronomarquage ». Pour constituer les caractéristiques discriminantes de l'empreinte numérique, ce document suggère d'utiliser les dimensions géométriques de l'envoi extraites de l'image, la répartition des valeurs de gris dans l'image, la position du bloc d'adresse de l'envoi dans l'image, les caractéristiques du bloc d'adresse (nombre de lignes, nombre de mots dans les lignes, nombre de symboles dans les mots).

Dans le procédé connu indiqué ci-dessus, les envois postaux récupérés dans les bacs de sortie de tri lors d'une première passe de tri sont recyclés en entrée de la machine de tri pour réaliser la seconde passe de tri. Toutefois, l'opérateur doit recycler les envois en respectant à la fois un ordre relatif entre les bacs et pour chaque bac l'ordre de classement relatif des envois. Or il peut arriver entre ces deux passes de tri une perturbation de l'ordre de classement des envois due par exemple à des incidents ou des secousses durant le transport des bacs pleins depuis les sorties de tri vers l'entrée de la machine de tri. Il peut également arriver qu'un certain nombre d'envois soient déplacés dans le magasin d'alimentation de la machine de tri à la suite d'un incident d'alimentation de celle-ci (bourrage ou autre). Il n'est pas exclu non plus que des prises doubles durant la première passe de tri ou des passes de tri subséquentes perturbent l'ordre de classement des envois entre les deux passes ce qui est contraignant pour l'actualisation de la base de données dans laquelle sont regroupées les empreintes des envois.

Le but de l'invention est de proposer un autre procédé pour trier des envois postaux en plusieurs passes de tri sur la base de l'utilisation des empreintes numériques pour les envois qui permet de s'affranchir de l'ordre de classement des envois postaux en entrée d'une machine de tri entre deux passes de tri lorsque le maintien de la séquence des envois n'est pas une contrainte du processus de tri.

A cet effet, l'invention a pour objet un procédé pour trier des envois postaux en plusieurs passes de tri à l'aide d'au moins une machine de tri ayant des sorties de tri composées de bacs, chaque envoi postal ayant une surface portant une adresse de distribution apte à être reconnue dans la machine de tri par un système de traitement de données pour la reconnaissance automatique d'adresse par OCR et/ou par vidéo-codage, dans lequel ;
lors de la première passe de tri, on charge dans les sorties de tri de la machine des bacs vides interchangeables portant chacun un numéro d'identification de bac et on communique au système de traitement de données les numéros d'identification de ces bacs vides ; on forme, au fur et à mesure du passage des envois postaux dans la machine de tri, une image de la surface de chaque envoi postal qui comporte l'information d'adresse de l'envoi et on dérive de cette image une empreinte numérique qui est un identifiant de l'envoi postal, et au fur et à mesure que les envois sont dirigés vers les bacs de sortie de tri, on enregistre dans le système de traitement de données les empreintes numériques des envois postaux en relation avec les numéros d'identification des bacs de sortie de tri correspondant et on comptabilise les envois postaux dirigés vers chaque bac de sortie de tri ;
lors de la seconde passe de tri sur la même machine de tri ou sur une autre machine de tri, on charge les bacs de sortie de tri pleins dans la machine de tri en communiquant au système de traitement de données le numéro d'identification de chaque bac plein chargé, on constitue dans le système de traitement de données une base de données formée par regroupement des empreintes numériques qui ont été enregistrées lors de la première passe de tri en relation avec les numéros d'identification des bacs de sortie de tri et qui correspondent aux numéros d'identification des bacs pleins chargés et au fur et à mesure du passage dans la machine de tri des envois postaux prélevés dans les bacs pleins chargés, on forme une image de la surface de chaque envoi postal courant qui comporte l'information d'adresse de l'envoi, on dérive de cette image de l'envoi postal courant une empreinte numérique intermédiaire, on accède et balaie la base de données pour détecter une concordance entre l'empreinte numérique intermédiaire de l'envoi postal courant et une empreinte numérique de la base de données, caractérisé en ce qu'on actualise la base de données en comptabilisant les concordances obtenues pour chaque bac chargé et les accès consécutifs à la base de données sans obtenir de concordance.

Le procédé selon l'invention peut présenter les particularités suivantes :
- si une concordance est détectée lors du balayage de la base de données, on marque l'empreinte numérique correspondante dans la base de données.
- on relève le numéro d'identification d'un bac par lecture d'un code à barres apposé sur le bac.

Un exemple de mise en oeuvre du procédé selon l'invention est décrit ci-après en détail et illustré par les dessins.
La figure 1 montre de façon schématique une machine de tri pour la mise en oeuvre du procédé selon l'invention.
La figure 2 illustre sous la forme d'un organigramme le déroulement du procédé selon l'invention lors d'une première passe de tri.
La figure 3 illustre sous la forme d'un organigramme le déroulement du procédé selon l'invention lors d'une seconde passe de tri.
La figure 4 est une représentation très schématique d'un exemple de la base de données mise en oeuvre dans le procédé selon l'invention.
La figure 5 illustre la construction d'une empreinte numérique exploitée par le procédé selon l'invention.
La figure 6 illustre encore la construction d'une empreinte numérique exploitée par le procédé selon l'invention.

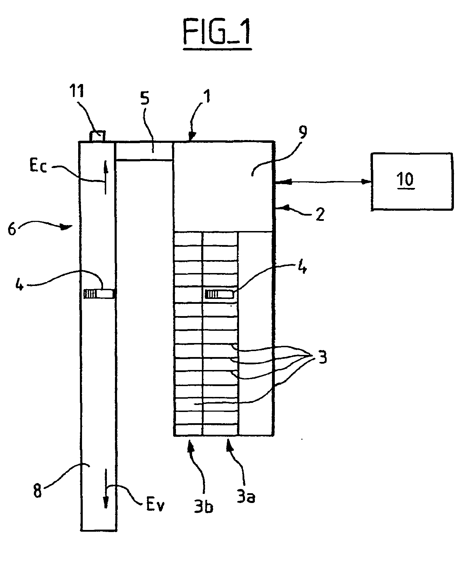

Le procédé selon l'invention pour trier des envois postaux en plusieurs passes de tri est mis en oeuvre dans une ou plusieurs machines de tri telle que celle représentée sur la figure 1.

La machine de tri 1 comporte une zone de tri 2 ayant un ensemble de sorties de tri 3 ici disposées en deux rangées superposées 3a,3b. Chaque sortie de tri est composée d'un réceptacle ou bac interchangeable 4 dans lequel sont dirigés les envois postaux affectés à la sortie de tri correspondante. Les bacs 4 des sorties de tri sont interchangeables dans la mesure où ils sont recyclés en entrée de la machine de tri. Pour la mise en oeuvre du procédé selon l'invention, chaque bac 4 porte un numéro d'identification de bac appelé par la suite Bac-Id, ce numéro d'identification pouvant être par exemple un code à barres apposé sur un flanc du bac pour être lu par tout moyen approprié de lecture automatique de codes à barres.

Comme visible sur la figure 1, un système de transfert 6 de bacs peut être prévu entre les sorties de tri 3 et le magasin 5 d'alimentation de la machine de tri. Le système de transfert 6 peut comprendre un convoyeur à bandes ou analogue 8.

A la fin d'une passe de tri, les bacs 4 remplis d'envois postaux peuvent ainsi être dégagés des sorties de tri de la machine et placés sur le convoyeur 8. Le convoyeur 8 étant prévu pour fonctionner de manière bidirectionnelle, les bacs pleins 4 peuvent ainsi être recyclés vers le magasin d'alimentation 5 de la même machine de tri pour effectuer une nouvelle passe de tri comme illustré par la flèche Ec ou vers une sortie d'évacuation comme représenté par la flèche Ev pour être recyclés dans le magasin d'alimentation d'une autre machine de tri.

Les envois postaux ont chacun une surface portant une information d'adresse de distribution et comme cela apparaît sur la figure 1, la machine de tri 1 comporte un dispositif de sérialisation et de lecture d'adresse 9 pour former une image de la surface de chaque envoi (à l'aide d'une caméra non représentée) comportant l'information d'adresse de l'envoi au fur et à mesure de leur dépilage du magasin 5 comme cela est bien connu.

Le dispositif 9 est relié en communication à un système de traitement de données 10 pour la reconnaissance automatique d'adresse par OCR et/ou par vidéo-codage.

Pour la mise en oeuvre du procédé selon l'invention, les numéros d'identification des bacs 4 pleins chargés en entrée de la machine de tri et des bacs vides 4 mis en place dans les sorties de tri 3 de la machine de tri sont toujours communiqués au système 10, par exemple par l'intermédiaire d'un lecteur de codes à barres 11 représenté très schématiquement sur la figure 1.

Le système de traitement de données 10 bien que représenté très schématiquement sous la forme d'un bloc sur la figure 1 est généralement constitué d'un ensemble de calculateurs reliés en réseau.

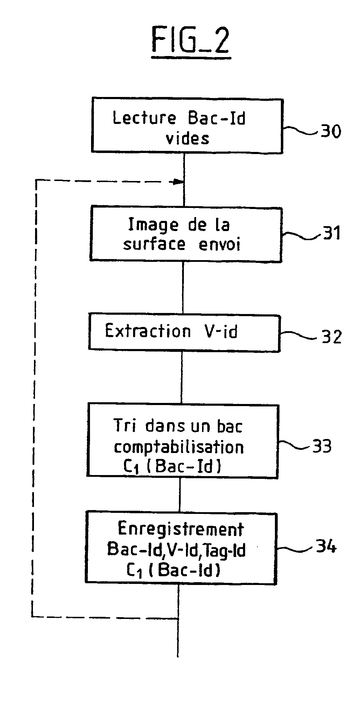

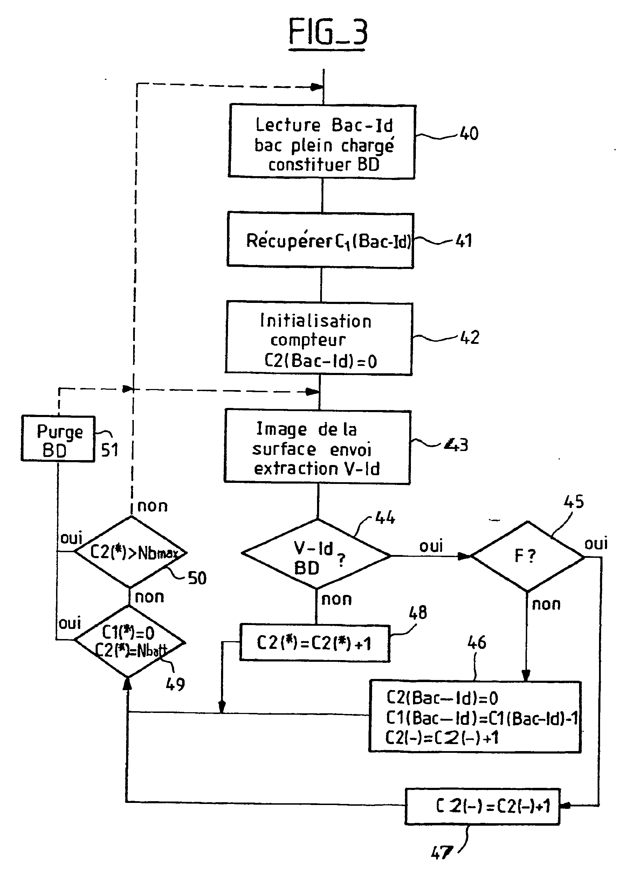

Les figures 2 et 3 illustrent le déroulement du procédé selon l'invention. Lors de la première passe de tri, des bacs vides 4 sont acheminés dans les sorties de tri 3 de la machine de tri et les numéros d'identification Bac-Id des bacs vides 4 sont communiqués au système 10 par l'intermédiaire du lecteur 11 (étape 30). Les envois postaux à trier sont chargés dans le magasin 5 de la machine pour être sérialisés par le dispositif 9.

Au fur et à mesure du passage des envois dans le dispositif 9, on forme une image de la surface de l'envoi comportant l'information d'adresse de distribution de l'envoi (étape 31) et on dérive de cette image une empreinte numérique V-Id qui est un identifiant de l'envoi (étape 32). Les composantes de l'empreinte numérique sont décrites plus loin.

Dans l'étape 31, un numéro temporaire appelé Tag-Id par la suite du type chronomarquage peut être généré et attribué à l'envoi pour effectuer les opérations de reconnaissance automatique d'adresse par OCR et de vidéo-codage comme cela est connu.

Parallèlement à l'extraction de l'empreinte numérique V-Id, l'information d'adresse est reconnue, un code de tri est généré et l'envoi postal est dirigé vers une sortie de tri correspondant au code de tri où il est chargé dans un bac 4 correspondant (étape 33). Au fur et à mesure que les envois postaux sont chargés dans les bacs de sortie de tri, on comptabilise pour chaque bac les envois postaux chargés dans le bac correspondant. Cette comptabilisation est représentée sur la figure 3 par le compteur C1 (Bac-Id). Par la suite, on utilise la terminologie C1 (Bac-Id) pour désigner le compteur C1 associé au bac ayant le numéro d'identification Bac-Id. La terminologie C1(*) est utilisé pour désigner tous les compteurs C1 associés respectivement à l'ensemble des bacs et la terminologie C1(-) est utilisée pour désigner tous les compteurs C1 associés respectivement à l'ensemble des bacs sauf le compteur C1 associé à un bac particulier désigné par Bac-Id.

Dans le système 10, on enregistre en mémoire (étape 34) l'empreinte numérique V-Id de chaque envoi postal, le cas échéant le numéro d'identification Tag-Id de l'envoi et la valeur courante du compteur C1 en relation avec un numéro Bac-Id de bac dans lequel sont dirigés les envois correspondants. Ces informations sont enregistrées dans le système 10 sous une forme structurée pour être récupérées lors de la seconde passe de tri. Par exemple, le système 10 peut être conçu pour constituer un fichier par bac dans lequel sont enregistrées entre autres la liste des empreintes numériques et des numéros d'identification des envois chargés dans ce bac ainsi que la valeur du compteur C1.

Lorsqu'un bac atteint un certain niveau de remplissage où à la fin de la première passe de tri, chaque bac plein 4 est enlevé de la sortie de tri 3 pour être recyclé en entrée de la même machine ou d'une autre machine située éventuellement dans un autre site.

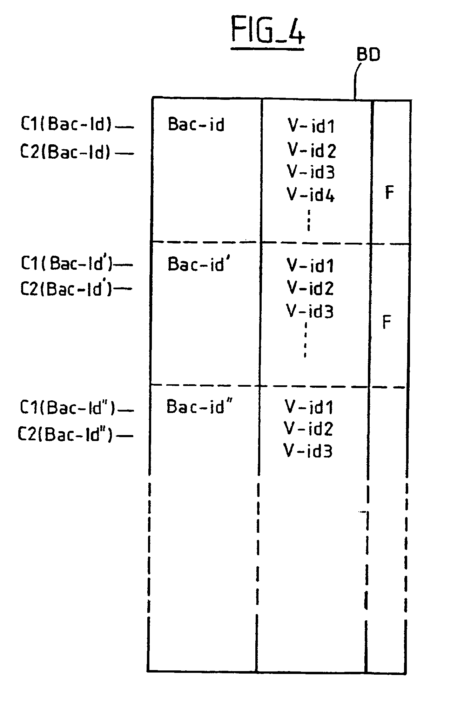

La figure 4 illustre le déroulement du procédé selon l'invention lors d'une seconde passe de tri ou d'une passe de tri subséquente.

Les bacs pleins 4 enlevés des sorties de tri 3 sont donc dirigés par exemple vers le magasin d'alimentation 5 de la machine. Le numéro Bac-Id de chaque bac plein est communiqué au système 10 (étape 40) via le lecteur 11 et les envois contenus dans le bac sont chargés dans le magasin 5 de la machine de tri. A ce stade, il n'est pas nécessaire pour l'opérateur de respecter un ordre de chargement des bacs pleins en entrée de la machine de tri. De la même façon, l'ordre de classement des envois peut être modifié dans le magasin de la machine.

Sur détection de l'introduction d'un numéro d'identification Bac-Id de bac plein, le système 10 recherche en mémoire le fichier correspondant à ce bac pour récupérer la liste des empreintes numériques V-Id qui lui correspondent ainsi que la valeur de comptabilisation C1(Bac-Id) correspondante au nombre d'envois contenus dans le bac.

Au fur et à mesure de l'introduction des bacs pleins en entrée de la machine de tri, le système 10 constitue une base de données BD par regroupement des listes des empreintes numériques V-Id qui ont été enregistrées lors de la première passe de tri en relation avec les numéros d'identification des bacs de sortie de tri et qui correspondent aux numéros d'identification des bacs pleins chargés dans la machine.

Si un bac plein est chargé en entrée de la machine de tri alors qu'il ne provient pas d'une sortie de tri de la machine, par exemple un bac plein provenant d'un flux local, son numéro d'identification ne sera pas reconnu par le système 10 et il ne servira donc pas à constituer à cette passe de tri la base de données BD.

Sur la figure 4, on a illustré un exemple de structure de la base de données BD dont les enregistrements contiennent les empreintes numériques V-Id1,V-Id2,V-Id3, etc... ici de trois bacs Bac-Id, Bac-Id' et Bac-Id". On a représenté aussi sur la figure 4 des compteurs C1 et C2 associés à ces trois bacs qui seront utilisés dans le processus illustré sur la figure 3. On a également représenté sur la figure 4 deux enregistrements qui sont marqués par le symbole F, ce marquage étant également utilisé dans le processus illustré sur la figure 3. Comme cela apparaîtra plus loin, le marquage d'un enregistrement par l'indicateur F dans le cours du processus illustré sur la figure 3 permet d'éviter de reconnaître par erreur deux fois le même envoi.

Suite à l'étape 40 de construction de la base de données BD, le système 10 récupère les valeurs des compteurs C1 associés aux bacs pleins chargés dans la machine de tri (étape 41) et initialise (étape 42) pour chaque bac chargé un compteur C2 destiné à comptabiliser les accès consécutifs à la base de données comme décrit ci-après. Dans les blocs 41 et 42 sur la figure 3, on a représenté les compteurs C1 et C2 associés au bac identifié par le numéro Bac-Id, par l'expression C1 (Bac-Id) et C2(Bac-Id).

A l'étape 43, au fur et à mesure que les envois sont sérialisés, on forme une image de la surface de l'envoi courant comportant l'information d'adresse pour dériver de cette image une empreinte numérique V-Id temporaire. Un numéro temporaire Tag-Id2 pour l'envoi courant peut également être généré par le système 10.

Le système 10 accède et balaie la base de données BD pour détecter une concordance (étape 44) entre l'empreinte numérique V-Id temporaire de l'envoi courant et une des empreintes numériques regroupées dans la base de données BD.

En cas de concordance avec une empreinte de la base de données, le système 10 vérifie (étape 45) que cette empreinte n'est pas marquée (symbole F sur la figure 4) et dans ce cas met à jour la valeur des compteurs des compteurs C1 et C2 associés aux bacs (étape 46) comme décrit ci-après et marque (du symbole F dans le cas de l'exemple) l'empreinte concordante dans la base de données BD. Le système 10 pourra se servir du numéro Tag-Id enregistré en correspondance avec l'empreinte concordante pour récupérer des informations de tri.

Dans le cas à l'étape 45 où l'empreinte concordante est déjà marquée, le système 10 met à jour la valeur des compteurs C2 associés aux bacs (étape 47) comme décrit ci-après.

Dans le cas où à l'étape 44, aucune concordance n'est détectée entre l'empreinte de l'envoi courant et les empreintes V-Id dans la base de données BD, le système 10 met à jour la valeur des compteurs C2 associés aux bacs (étape 48) et procède à une reconnaissance automatique d'adresse par OCR et/ou par vidéo-codage pour déterminer un code de tri correspondant à l'adresse de distribution de cet envoi. Les informations de tri concernant cet envoi pourront être enregistrées dans le système 10 en relation avec le numéro temporaire Tag-Id2.

Dans les étapes 46,47 et 48, on comptabilise dans le compteur C1(Bac-Id) associé à un bac, le nombre résiduel d'envois pour le bac non encore identifés lors du passage d'un envoi courant et dans le compteur C2(Bac-Id) associé à un bac le nombre d'accès consécutifs (balayages) à la base de données BD sans qu'un envoi du bac ait été identifié lors du passage de l'envoi courant.

Plus particulièrement, dans l'étape 46, une concordance a été détectée avec une empreinte de la base de données non marquée. Le compteur C2 du bac correspondant à cette empreinte est initialisé : C2(Bac-Id)=0. Le compteur C1 du bac concerné est décrémenté d'une unité : C1(Bac-Id)=C1(Bac-Id)-1. Les compteurs C2 associés aux autres bacs en mémoire dans la base de données BD sont incrémentés chacun d'une unité : C2(-) = C2(-)+1. Comme indiqué plus haut, l'empreinte en question dans la base de données est marquée (F).

Dans l'étape 47, une concordance a été détectée mais sur une empreinte de la base de données BD qui est marquée. Les compteurs C1 et C2 associés au bac correspondant à cette empreinte restent inchangés. Par contre, les compteurs C2 associés aux autres bacs en mémoire dans la base de données BD sont incrémentés chacun d'une unité : C2(-)=C2(-)+1.

Dans l'étape 48, aucune concordance n'a été détectée. Dans ce cas, les compteurs C2 associés à tous les bacs en mémoire dans la base de données BD sont incrémentés d'une unité : C2(*)=C2(*)+1.

A la suite des étapes alternatives 46,47 ou 48, le système 10 compare la valeur des compteurs C1 et C2 associés à chaque bac (étapes 49 et 50) à des seuils déterminés Nbatt et Nbmax. Nbatt est une valeur de seuil réglable, de l'ordre de 10, qui correspond à un certain délai d'attente avant de procéder à une purge (étape 51) de la base de données BD. Nbmax est une valeur de seuil, de l'ordre de 1000, qui est égale au nombre d'envois maximum en attente dans le magasin d'alimentation 5 de la machine de tri.

A l'étape 49, si la valeur courante d'un compteur C1 associé à un bac est nulle : C1(*)=0 et si la valeur du compteur C2 associé à ce bac est supérieure à Nbatt : C2(*)>Nbatt alors on purge dans l'étape 51 la base de données BD des empreintes V-Id qui sont enregistrées en relation avec le bac en question. Dans la négative en sortie de l'étape 49, on compare la valeur du compteur C2 de chaque bac en mémoire dans la base de données BD à la valeur de seuil Nbmax : C2(*)>Nbmax. Si la valeur du compteur C2 d'un bac est supérieure à Nbmax, on purge à l'étape 51 la base de données BD des empreintes V-Id qui sont enregistrées en relation avec le bac en question. Ce cas correspond par exemple à la situation où tous les envois chargés dans le magasin de la machine sont passés sans qu'il y ait eu de détection de concordance pour quelques-uns uns d'entre eux.

Après l'étape 51, le traitement se poursuit à l'étape 43 pour le passage d'un nouvel envoi ou à l'étape 40 si un nouveau bac plein est chargé dans la machine de tri.

Ainsi, au fur et à mesure du chargement des bacs dans la machine de tri et du passage des envois dans celle-ci, la base de données BD est actualisée en conséquence pour limiter l'horizon de recherche de concordance. L'horizon de recherche est au maximum de l'ordre de 2 fois Nbmax dans le cas où un bac est chargé à la fin du magasin. Le critère de purge de la base de données BD présenté ci-dessus prend en compte la situation selon laquelle, les envois d'un bac sont répartis entre des envois déjà chargés dans le magasin de la machine de tri.

A la fin de la seconde passe ou quand un bac d'une sortie de tri de la machine a atteint un certain niveau de remplissage, le système 10 enregistre dans un fichier associé au bac de la sortie de tri la liste des empreintes V-Id des envois rangés dans ce bac et ayant fait l'objet d'une détection de concordance à l'étape 45 et la liste des empreintes V-Id des envois rangés dans ce bac et non reconnues à l'étape 44. Ces données associées au bac sont prêtes pour être utilisées dans une nouvelle passe de tri qui peut être réalisée sur la même machine ou sur une autre machine de tri. En cas de dernière passe de tri, ces données sont purgées du système 10.

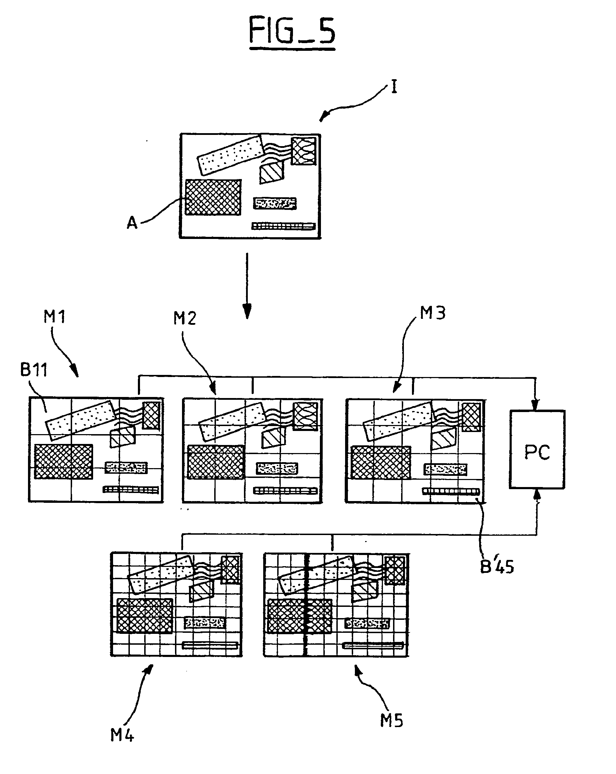

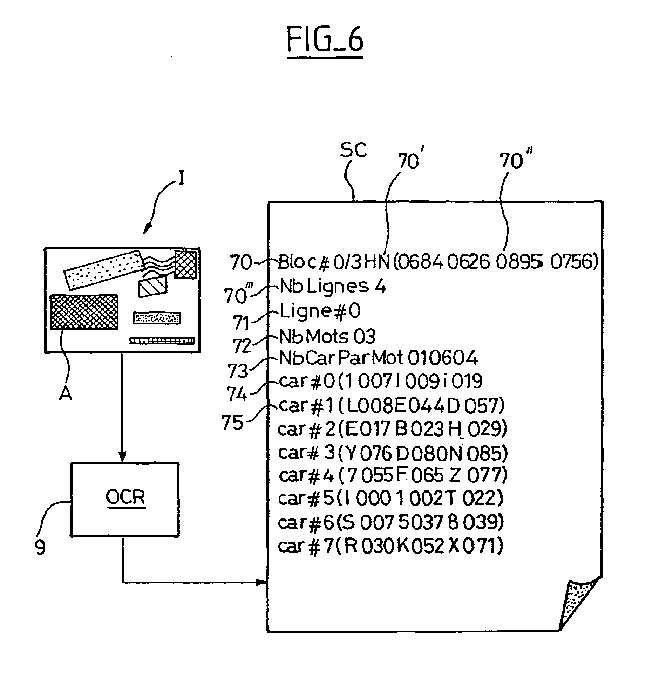

La manière dont une empreinte V-Id d'un envoi est constituée est décrite ci-après en relation avec les figures 5 et 6.

La figure 5 montre une image I en niveaux de gris de la surface d'un envoi postal portant un bloc d'adresse de distribution A. L'empreinte numérique V-Id de l'envoi postal qui est dérivée de l'image numérique I comprend une première composante PC, représentée figure 5, et une seconde composante SC, représentée figure 6. Ces deux composantes PC et SC de l'empreinte doivent en principe être indépendantes l'une de l'autre pour obtenir un caractère fortement discriminant de l'empreinte.

La première composante PC est représentative d'une caractéristique physique de l'image numérique I est est par exemple extraite par analyse statistique de la luminance des points de l'image numérique I qui aura subi préalablement une succession de filtrages abaissant le niveau de résolution de l'image afin de réduire les temps de traitement pour l'analyse statistique et de disposer d'un contenu de type basse-fréquence lequel est peu sensible aux fluctuations de luminance lors d'acquisitions multiples. La luminance d'un point de l'image correspond à la valeur de niveau de gris du point de l'image. A partir de l'image numérique I basse résolution de la surface d'un envoi postal, on peut extraire par calcul, des attributs globaux tels que la hauteur et la largeur de l'envoi postal, la valeur de luminance maximale - minimale - moyenne des points de l'image numérique, l'écart type - énergie - entropie des valeurs de luminance. On peut également extraire par calcul, des attributs locaux relatifs à des parties distinctes de l'image numérique. La figure 5 montre l'image numérique I subdivisée en plusieurs parties distinctes B11,B'45 issues de différents quadrillages M1,M2,M3,M4,M5 dans l'image numérique I. Le quadrillage M1 définit ici 3x3 parties distinctes. Le quadrillage M5 définit 8x10 parties distinctes. Le nombre de parties distinctes dans un quadrillage et le nombre de quadrillages peut être un paramètre de l'analyse statistique appliquée à l'image numérique pour extraire la première composante PC de l'empreinte numérique. A partir de chaque partie telle que B11 et B'45 de l'image numérique issue d'un quadrillage tel que M1 ou M3, on peut extraire des attributs locaux tels que la valeur de luminance maximale - minimale - moyenne des points de cette partie de l'image numérique, écart-type - énergie - entropie des valeurs de luminance dans cette partie de l'image numérique. Ces attributs locaux contiennent une information d'autant plus discriminante que les envois postaux sont hétérogènes. On peut également extraire de cette partie de l'image numérique un histogramme représentatif de la distribution des valeurs de luminance. Plusieurs histogrammes pourront être extraits pour des parties distinctes de l'image numérique I et traduisent une information de texture discriminante peu sensible aux faibles variations dans les images numériques formées pour le même envoi postal au cours des passes de tri successives.

L'ensemble des attributs globaux et locaux extraits pour une image numérique constituent la première composante PC de l'empreinte V-Id d'un envoi postal.

Figure 6, la seconde composante SC de l'empreinte numérique est extraite de l'image numérique I par le dispositif de reconnaissance d'adresse par OCR 9. Un système de reconnaissance d'adresse par OCR est capable de fournir des données indicatives de la position de blocs d'informations textuels détectés dans l'image numérique, comme le bloc contenant l'information d'adresse A. Ces données indicatives de position peuvent être les coordonnées spatiales et d'orientation de la zone rectangulaire formant le bloc d'adresse A. Un système de reconnaissance par OCR 9 est apte également à fournir une description textuelle de chaque bloc d'information détecté dans l'image numérique, en particulier le bloc d'adresse A. Une description textuelle d'un bloc d'information tel que A peut consister dans l'indication du nombre de lignes de caractères détectées dans le bloc d'information, le nombre de mots détectés dans chaque ligne de caractères, le nombre de caractères détectés dans chaque mot de chaque ligne de caractères.

La figure 6 montre un exemple de description textuelle d'un bloc d'information d'adresse constituant la seconde composante SC de l'empreinte d'un envoi postal.

Sur la figure 6 :
« BLOC#0/3» désigné par 70, référence le bloc d'information 0 parmi les 3 blocs d'information détectés dans l'image numérique I ;
« HN » désigné par 70', est une donnée indicative de l'orientation du bloc d'information O dans l'image numérique ;
« (0684 0626 0895 0756) » désigné par 70", sont des données représentatives des coordonnées spatiales du bloc d'information 0 dans l'image numérique ;
« NbLignes 4 » désigné par 70"', indique que le bloc d'information 0 comporte 4 lignes de caractères ;
« Ligne #0 » désigné par 71, référence la première ligne de caractères détectée dans le bloc d'information 0 ;
« NbMots O3 » désigné par 72, est une donnée indiquant que 3 mots ont été détectés dans la première ligne de caractères ;
« NbCarParMot 01 06 04 » désigné par 73, sont des données indiquant que les 3 mots de la première ligne de caractères comprennent respectivement 1, 6 et 4 caractères ;
« car #0 (1 007 I 009 i 019) » désigné par 74, sont des données indiquant que pour le premier caractère de la première ligne de caractères, l'OCR a identifié 3 caractères candidats respectivement 1, I et i avec des distances de ressemblance respectivement de 007, 009 et 019 ;
« car#1 (L 008 E 009 D 057) » désigné par 75, sont des données indiquant que pour le second caractère de la première ligne de caractères, L'OCR a identifié 3 caractères candidats respectivement L, E et D avec des distances de ressemblance respectivement de 008, 009 et 057 ;
... et ainsi de suite pour les autres caractères de la première ligne de caractères sachant qu'une valeur 0 pour la distance de ressemblance est la distance la plus faible, c'est-à-dire représente l'écart le plus faible par rapport au caractère idéal..

Dans l'étape 44 sur la figure 3, le balayage de la base de données BD consiste à comparer les composantes PC et SC de l'empreinte intermédiaire de l'envoi courant avec les composantes PC et SC des empreintes mémorisées dans la base de données BD.

La comparaison des composantes PC des empreintes dans le cas d'une composante PC constituée d'attributs globaux et locaux comme indiquée plus haut peut commencer par la comparaison des attributs globaux respectifs qui inclut un seuillage des valeurs absolues des variations sur chaque attribut global pour faire un premier filtrage parmi les empreintes enregistrées dans la base de données. Ce filtrage permet d'éliminer les empreintes fortement dissemblantes de l'empreinte de l'envoi courant et de retenir un faible nombre d'empreintes candidates. Puis une comparaison des attributs locaux de la composante PC de l'empreinte de l'envoi courant et des empreintes candidates respectivement peut être effectuée pour réduire le nombre d'empreintes candidates. Cette comparaison peut être basée d'abord sur le calcul d'un coefficient de corrélation normalisé glissant entre les histogrammes correspondants dans l'empreinte de l'envoi courant et les empreintes candidates respectivement ce qui permet de s'affranchir des variations de luminance lors des prises d'image de la surface des envois et ensuite sur le calcul d'un coefficient de corrélation normalisé, par type d'attribut, entre les autres attributs locaux dans l'emprei nte de l'envoi courant et dans les empreintes candidates respectivement qui permet de s'affranchir des problèmes de normalisation dus à la différence de variabilité de chaque attribut local. Les empreintes candidates sont ensuite triées par ordre de ressemblance décroissant sur la base des coefficients de corrélation et un nombre fixé d'empreintes candidates les plus ressemblantes sont retenues.

La comparaison des composantes SC des empreintes peut commencer par une mesure de la ressemblance des données indicatives de position des blocs d'information pour obtenir une présélection des empreintes candidates. Les empreintes candidates peuvent ensuite être triées par ordre décroissant à partir d'une mesure de ressemblance des descriptions textuelles des blocs d'information.

La comparaison des composantes PC peut être privilégiée par rapport à la comparaison des composantes SC ou inversement en fonction du type d'objets postaux traités. Pour un lot de lettres ayant une grande proportion de lettres manuscrites, la comparaison des composantes PC des signatures sera privilégiée pour rechercher une empreinte dans la base de données BD. Par contre pour un lot d'envois en nombre, la comparaison des composantes SC des empreintes pourra être privilégiée.

Dans le procédé selon l'invention, il est possible d'apposer par étiquetage ou directement le numéro Tag-Id de chaque envoi sur la surface de l'envoi de façon à exploiter des solutions existantes pour procéder à la reconnaissance automatique d'adresse par OCR et/ou par vidéo-codage.

## Revendications

1. Un procédé pour trier des envois postaux en plusieurs passes de tri à l'aide d'au moins une machine de tri (1) ayant des sorties de tri (3) composées de bacs (4), chaque envoi postal ayant une surface portant une adresse de distribution (A) apte à être reconnue dans la machine de tri par un système de traitement de données (10) pour la reconnaissance automatique d'adresse par OCR et/ou par vidéo-codage, dans lequel :
lors de la première passe de tri, on charge dans les sorties de tri de la machine des bacs vides interchangeables portant chacun un numéro d'identification (Bac-Id) de bac et on communique (30) au système de traitement de données les numéros d'identification de ces bacs vides ; on forme (31), au fur et à mesure du passage des envois postaux dans la machine de tri, une image de la surface de chaque envoi postal qui comporte l'information d'adresse de l'envoi et on dérive (32) de cette image une empreinte numérique (V-Id) qui est un identifiant de l'envoi postal, et au fur et à mesure que les envois sont dirigés vers les bacs de sortie de tri, on enregistre (33,34) dans le système de traitement de données les empreintes numériques des envois postaux en relation avec les numéros d'identification des bacs de sortie de tri correspondant et on comptabilise les envois postaux dirigés vers chaque bac de sortie de tri ;
lors de la seconde passe de tri sur la même machine de tri ou sur un autre machine de tri, on charge les bacs de sortie de tri pleins dans la machine de tri en communiquant (40) au système de traitement de données le numéro d'identification de chaque bac plein chargé, on constitue dans le système de traitement de données une base de données (BD) formée par regroupement des empreintes numériques qui ont été enregistrées lors de la première passe de tri en relation avec les numéros d'identification des bacs de sortie de tri et qui correspondent aux numéros d'identification des bacs pleins chargés et au fur et à mesure du passage dans la machine de tri des envois postaux prélevés dans les bacs pleins chargés, on forme (43) une image de la surface de chaque envoi postal courant qui comporte l'information d'adresse de l'envoi, on dérive de cette image de l'envoi postal courant une empreinte numérique intermédiaire, on accède et on balaie (44) la base de données pour détecter une concordance entre l'empreinte numérique intermédiaire de l'envoi postal courant et une empreinte numérique de la base de données, **caractérisé en ce qu'**on actualise (51) la base de données en comptabilisant (46,47,48) les concordances obtenues pour chaque bac chargé et les accès consécutifs à la base de données sans obtenir de concordance.

2. Le procédé selon la revendication 1, dans lequel si une concordance est détectée lors du balayage de la base de données, on marque l'empreinte numérique correspondante dans la base de données.

3. Le procédé selon la revendication 1 ou 2, dans lequel on relève le numéro d'identification des bacs par lecture d'un code à barres apposé sur chaque bac.

4. Le procédé selon l'une des revendications 1 à 3, dans lequel on dérive de l'image numérique de la surface d'un envoi une empreinte numérique (V-Id) à deux composantes pour cet envoi, la première composante (PC) étant représentative d'une caractéristique physique de l'image numérique et la seconde composante (SC) étant extraite par reconnaissance optique de caractères (OCR) dans l'image numérique.

5. Le procédé selon la revendication 4, dans laquelle la première composante (PC) de l'empreinte numérique est extraite par analyse statistique de la luminance des points de l'image numérique.

6. Le procédé selon la revendication 4, dans laquelle la première composante (PC) de l'empreinte numérique est constituée par des données représentatives de la variation des valeurs de luminance dans l'image numérique.

7. Le procédé selon la revendication 4, dans laquelle la première composante (PC) de l'empreinte numérique est constituée par des données représentatives de la variation des valeurs de luminance dans des parties distinctes de l'image numérique.

8. Le procédé selon la revendication 4, dans laquelle la première composante (PC) de la signature est constituée par des histogrammes représentatifs de la distribution des valeurs de luminance dans des parties distinctes de l'image numérique.

9. Le procédé selon la revendication 7 ou 8, dans laquelle les parties distinctes de l'image numérique sont issues de différents quadrillages (M1,M2,M3) dans l'image numérique.

10. Le procédé selon la revendication 4, dans laquelle la seconde composante (SC) de l'empreinte numérique est constituée par des données indicatives de la position d'au moins un bloc d'information dans l'image numérique.

11. Le procédé selon la revendication 4, dans laquelle la seconde composante (SC) de l'empreinte numérique est constituée par une description textuelle d'au moins un bloc d'information dans l'image numérique.

## Patentansprüche

1. Verfahren zum Sortieren postalischer Sendungen in mehreren Sortierdurchgängen mittels mindestens einer Sortiermaschine (1) mit aus Behältnissen (4) gebildeten Sortierausgängen (3), wobei jede postalische Sendung eine Oberfläche aufweist, die eine Verteiladresse (A) aufzeigt, die in der Sortiermaschine durch ein Datenverarbeitungssystem (10) zur automatischen Adresserkennung durch OCR und/oder Video-Kodierung erkannt werden kann, bei dem:
bei dem ersten Sortierdurchgang in die Sortierausgänge der Maschine leere, untereinander austauschbare Behältnisse geladen werden, die jeweils eine Behältnis-Identifikationsnummer (Bac-Id) tragen, und dem Datenverarbeitungssystem die Identifikationsnummern dieser leeren Behältnisse mitgeteilt werden (30); im Verlaufe des Durchlaufs der postalischen Sendungen in der Sortiermaschine wird ein Bild der Oberfläche jeder postalischen Sendung gebildet (31), das die Adressinformation der Sendung umfasst, und von diesem Bild eine digitale Kennung (V-Id) abgeleitet (32), die eine Identifizierende der postalischen Sendung ist, und im Verlaufe, wie die Sendungen zu den Sortierausgang-Behältnissen geleitet werden, werden in dem Datenverarbeitungssystem die digitalen Kennungen der postalischen Sendungen in Relation zu den Identifikationsnummern der entsprechenden Sortierausgang-Behältnisse gespeichert (33, 34) und die zu jedem Sortierausgang-Behältnis geleiteten Sendungen gezählt;
bei dem zweiten Sortierdurchgang auf derselben Sortiermaschine oder auf einer anderen Sortiermaschine werden die vollen Sortierausgang-Behältnisse in die Sortiermaschine geladen unter Mitteilung (40) der Identifikationsnummer jedes geladenen vollen Behältnisses an das Datenverarbeitungssystem, in dem Datenverarbeitungssystem wird eine Datenbasis (BD) geschaffen, die gebildet ist durch das Gruppieren der digitalen Kennungen, die im Laufe des ersten Sortierdurchgangs in Relation zu den Identifikationsnummern der Sortierausgang-Behältnisse gespeichert wurden und die den Identifikationsnummern der geladenen vollen Behältnisse entsprechen, und im Verlaufe des Durchlaufs der aus den geladenen vollen Behältnissen entnommenen postalischen Sendungen in der Sortiermaschine wird ein Bild der Oberfläche jeder laufenden postalischen Sendung gebildet (43), das die Adressinformation der Sendung umfasst, aus diesem Bild der laufenden postalischen Sendung wird eine intermediäre digitale Kennung abgeleitet, die Datenbasis wird angesprochen und durchsucht (44) zum Ermitteln einer Konkordanz zwischen der intermediären digitalen Kennung der laufenden postalischen Sendung und einer digitalen Kennung der Datenbasis,
**dadurch gekennzeichnet,**
**dass** die Datenbasis aktualisiert wird (51) durch Zählen (46, 47, 48) der für jedes geladene Behältnis erhaltenen Konkordanzen und der aufeinander folgenden Zugriffe auf die Datenbasis, ohne Konkordanz zu erhalten.

2. Verfahren nach Anspruch 1, bei dem, wenn eine Konkordanz bei der Suche in der Datenbasis ermittelt wird, in der Datenbasis die entsprechende digitale Kennung markiert wird.

3. Verfahren nach Anspruch 1 oder 2, bei dem die Identifikationsnummer der Behältnisse durch Lesen eines an jedem Behältnis angebrachten Barcodes erfasst wird.

4. Verfahren nach einem der Ansprüche 1 bis 3, bei dem aus dem digitalen Bild der Oberfläche einer Sendung eine digitale Kennung (V-Id) mit zwei Komponenten für diese Sendung abgeleitet wird, wobei die erste Komponente (PC) repräsentativ ist für ein physisches Merkmal des digitalen Bildes und die zweite Komponente (SC) durch optische Zeichenenerkennung (OCR) in dem digitalen Bild extrahiert wird.

5. Verfahren nach Anspruch 4, bei dem die erste Komponente (PC) der digitalen Kennung durch statistische Analyse der Leuchtdichte der digitalen Bildpunkte extrahiert wird.

6. Verfahren nach Anspruch 4, bei dem die erste Komponente (PC) der digitalen Kennung durch für die Variation der Leuchtdichtewerte in dem digitalen Bild repräsentative Werte beschaffen ist.

7. Verfahren nach Anspruch 4, bei dem die erste Komponente (PC) der digitalen Kennung durch für die Variation der Leuchtdichtewerte in distinkten Partien des digitalen Bildes repräsentative Daten beschaffen ist.

8. Verfahren nach Anspruch 4, bei dem die erste Komponente (PC) der Signatur durch für die Verteilung der Leuchtdichtewerte in distinkten Partien des digitalen Bildes repräsentative Histogramme beschaffen ist.

9. Verfahren nach Anspruch 7 oder 8, bei dem die distinkten Partien des digitalen Bildes aus verschiedenen Rastern (M1, M2, M3) in dem digitalen Bild stammen.

10. Verfahren nach Anspruch 4, bei dem die zweite Komponente (SC) der digitalen Kennung durch die Position wenigstens eines Informationsblocks in dem digitalen Bild anzeigende Daten beschaffen ist.

11. Verfahren nach Anspruch 4, bei dem die zweite Komponente (SC) der digitalen Kennung durch eine textliche Beschreibung wenigstens eines Informationsblocks in dem digitalen Bild beschaffen ist.

## Claims

1. A method of sorting postal items in a plurality of sorting passes using at least one sorting machine (1) having sorting outlets (3) constituted by bins (4), each postal item having a surface carrying a destination address (A) suitable for being recognized in the sorting machine by a data processor system (10) for automatically recognizing addresses by OCR and/or video coding, wherein:
during the first sorting pass, loading interchangeable empty bins into the sorting outlets of the machine, each bin carrying a bin identification number (Bin_ID), and communicating (30) the identification numbers of the empty bins to the data processor system; forming (31) an image of the surface of each postal item as each item passes through the sorting machine, said image including the address information of the item, and deriving (32) from said image a digital fingerprint (V_ID) which is an identifier of the postal item, and as said items are directed towards the sorting outlet bins, recording (33, 34) in the data processor system the digital fingerprints of the postal items in association with the identification numbers of the corresponding sorting outlet bins, and counting the postal items sent to each sorting outlet bin; and
during the second sorting pass on the same sorting machine or on another sorting machine, loading the full sorting outlet bins into the sorting machine while informing (40) the data processor system of the identification number of each loaded full bin, building up a database (DB) in the data processor system, the database comprising a collection of digital fingerprints as recorded during the first sorting pass in association with the sorting outlet bin identification numbers and corresponding to the identification numbers of the full bins that are loaded into the machine as postal items taken from the loaded full bins pass through the sorting machine, forming (43) an image of the surface of each current postal item, which image includes the address information of the item, deriving an intermediate digital fingerprint from this image of the current postal item, assessing and scanning (44) the database in order to detect a match between the intermediate digital fingerprint of the current postal item and a digital fingerprint in the database, and updating (51) the database by counting (46, 47, 48) the matches obtained for each loaded bin and the consecutive accesses to the database made without obtaining a match.

2. The method of claim 1, wherein if a match is detected during the scan of the database, the corresponding digital fingerprint is marked in the database.

3. The method of claim 1 or claim 2, wherein the bin identification numbers are picked up by reading a bar code applied to each bin.

4. The method of any one of claims 1 to 3, wherein a two-component digital fingerprint (V_ID) is deduced from the digital image of the surface of an item, a first component (PC) being representative of a digital characteristic of the physical image, and a second component (SC) being extracted by optical character recognition (OCR) in the digital image.

5. The method of claim 4, wherein the first component (PC) of the digital fingerprint is extracted by statistical analysis of the luminance of points of the digital image.

6. The method of claim 4, wherein the first component (PC) of the digital fingerprint is constituted by data representative of variation of the luminance values in the digital image.

7. The method of claim 4, wherein the first component (PC) of the digital fingerprint is constituted by data representative of variation of the luminance values in distinct portions of the digital image.

8. The method of claim 4, wherein the first component (PC) of the signature is constituted by histograms representative of the distribution of luminance values in distinct portions of the digital image.

9. The method of claim 7 or clam 8, wherein the distinct portions of the digital image are derived from different grids (M1, M2, M3) in the digital image.

10. The method of claim 4, wherein the second component (SC) of the digital fingerprint is constituted by data specifying the position of at least one information block in the digital image.

11. The method of claim 4, wherein the second component (SC) of the digital fingerprint is constituted by a textual description of at least one information block in the digital image.
